Europäisches Patentamt

European Patent Office

Office européen des brevets

(19)

(11) Publication number: **0 241 722**
**A2**

(12) # EUROPEAN PATENT APPLICATION

(21) Application number: **87103696.8**

(22) Date of filing: **13.03.87**

(51) Int. Cl.⁴: **G 02 B 7/18**

(30) Priority: **17.03.86 US 840239**

(43) Date of publication of application: **21.10.87**
**Bulletin 87/43**

(84) Designated Contracting States: **DE FR GB IT SE**

(71) Applicant: **CINCINNATI MILACRON INC., 4701 Marburg Avenue, Cincinnati Ohio 45209 (US)**

(72) Inventor: **Haffner, James I., 4589 Hubble Road, Cincinnati Ohio 45247 (US)**
Inventor: **Ross, Tony Lee, 12095 Elkridge Drive, Cincinnati Ohio 45240 (US)**

(74) Representative: **Lally, William et al, FORRESTER & BOEHMERT Widenmayerstrasse 4/I, D-8000 München 22 (DE)**

(54) **Laser beam switching device.**

(57) A box (20) has a laser beam entrance part (18a) and two non-aligned beam exit ports (18b, 18c). A mirror (511) is mounted to a swinging gate assembly (517) within the box (20) to direct the beam through a selected exit port.

EP 0 241 722 A2

ACTORUM AG

**Title:** "Laser Beam Switching Device"

The invention relates generally to laser utilising machinery, and, the invention relates specifically to a laser systems where a plurality of stations share a common lasing unit.

In the laser arts, it is felt to be beneficial, and commercially economical, particularly in the area of large scale lasing units i.e. having an output of 1.5kw and above, that a single lasing unit may be piped to a plurality of work stations, where the stations may be dissimilar, or identical machines.

To avoid the necessity of moving a lasing unit to varied work stations, it has been proposed that the light tube system from the laser unit be provided with a beam switcher which, at predetermined intervals, may be activated to re-route the laser beam from a former, straight line path.

Such a system has been proposed in a very rudimentary form in the Japanese unexamined Patent Application No. 57-181, 798, disclosure date: November 9, 1982, entitled Spot Welder Utilising Laser Beam. In the Japanese application, a floor mounted laser generator unit directs a laser beam to an aperture in a robot base. The drawings illustrate a linear cylinder having a single-end position rod with a mirror attached to the rod end, and the cylinder is oriented transversely to the laser beam. An angled mirror is carried on the piston rod end and is movable to intercept the laser beam and divert the beam to another robot.

It is therefore an object of the present invention to provide a reliable laser beam switcher which may be repeatedly actuated while maintaining accuracy.

According to this invention there is provided a laser beam switching device comprising a housing, a beam entry aperture in the housing, a first beam exit aperture in the housing, a second beam exit aperture in the housing, a second beam exit aperture in the housing located out of line with said entry aperture, a mirror means pivotally mounted in said housing, drive means for driving said mirror means between open and closed positions, positive stop means for accurately locating said mirror means in said closed position, and signal means for indicating said open and closed positions.

In this manner the mirror means may be pivoted to said open position to permit a laser beam to pass straight through said housing, and said closed position to divert a laser beam entering said housing through said entry tube, to said second, out of line exit tube.

Preferably the switching device comprises light tubes secured over the entry aperture and the first and second exit apertures, and advantageously the mirror means is pivotally mounted on a pivot rod secured in the housing.

Preferably the housing is hermetically sealed, and advantageously the mirror means comprises a frame, a mirror adjustably mounted on said frame, and means for adjusting the plane of the mirror relative to said frame. Advantageously said frame carries a part-spherical member and the mirror carries a corresponding mating part-spherical member, means being provided to bias said part-spherical surfaces into engagement.

Conveniently means is provided to deliver coolant fluid to the mirror assembly.

There will now be given a detailed description, to be read with reference to the accompanying drawings of a laser beam switching device which is a preferred embodiment of this invention, which has been selected for the purposes of illustrating the invention by way of example. In the accompanying drawings:

FIGURE 1 is a side elevational view of a laser robotic system, employing the laser beam switching device of the present invention;

FIGURE 2 is a plan view of the laser beam switching device taken along the line 2-2 of Figure 1;

FIGURE 3 is a side elevational view taken along the line 3-3 of Figure 2;

FIGURE 4 is a plan view of the inner mechanism of Figure 2 with covers removed;

FIGURE 5 is an elevational view of the mechanism of Figure 4, taken along the line 5-5 of Figure 4;

FIGURE 6 is an elevational section through the pivot drive mechanism taken along the line 6-6 of Figure 4;

FIGURE 7 is a plan section through the mirror mounting assembly taken along the line 7-7 of Figure 5; and

FIGURE 8 is a rear elevational view of the mirror gate assembly taken along the line 8-8 of Figure 4.

0241722

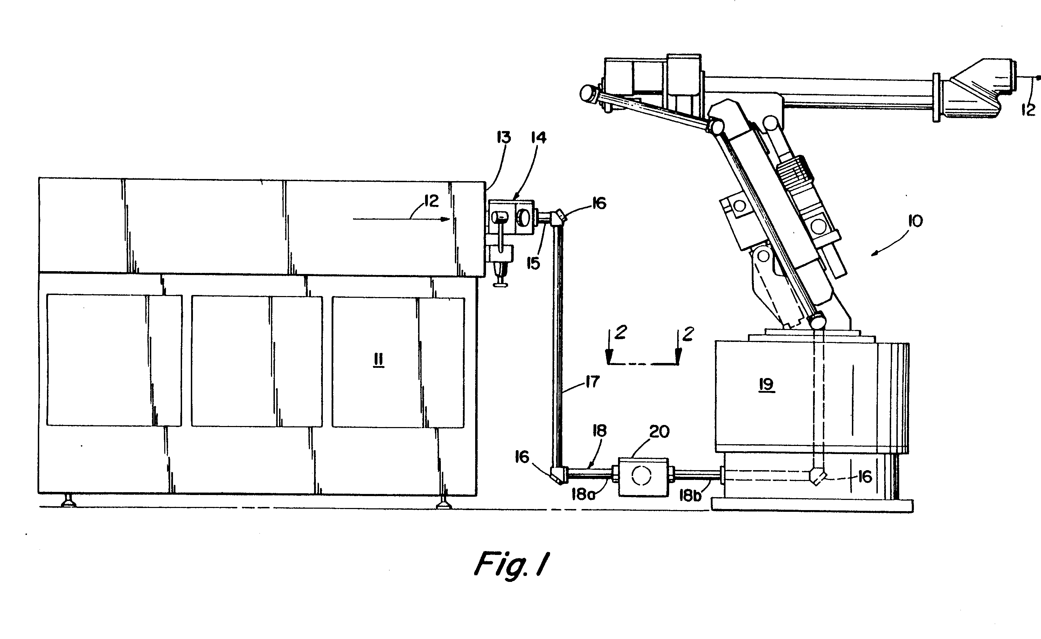

Figure 1 of the drawings illustrates a right side elevational view of a laser robot 10 utilising a laser generating unit 11 mounted on a floor nearby. The laser unit 11 may be any of a variety of industrial lasing units manufactured by companies such as Coherent General, Spectra-Physics, etc. The preferred laser unit 11 for many power applications is a $CO_2$ gas laser, emitting a laser beam 12 along a horizontal path from the exit end 13 of the unit 11. The beam 12 is directed into a beam combining unit 14, exiting through a light pipe 15, which is a hollow tube connected to the beam combiner unit 14 and to a path-direction changing unit such as the corner mirror assembly 16 shown. The mirror assembly 16 directs the beam 12 downward along a vertical path through a light pipe 17 to a second mirror assembly 16 which redirects the beam 12 along a horizontal path through a light tube 18 into the base 19 of the robot 10. The light pipe 18 may be continous in many applications, but for the preferred embodiment the pipe 18 may be replaced by two sections 18a, 18b with a beam switching box 20 located therebetween.

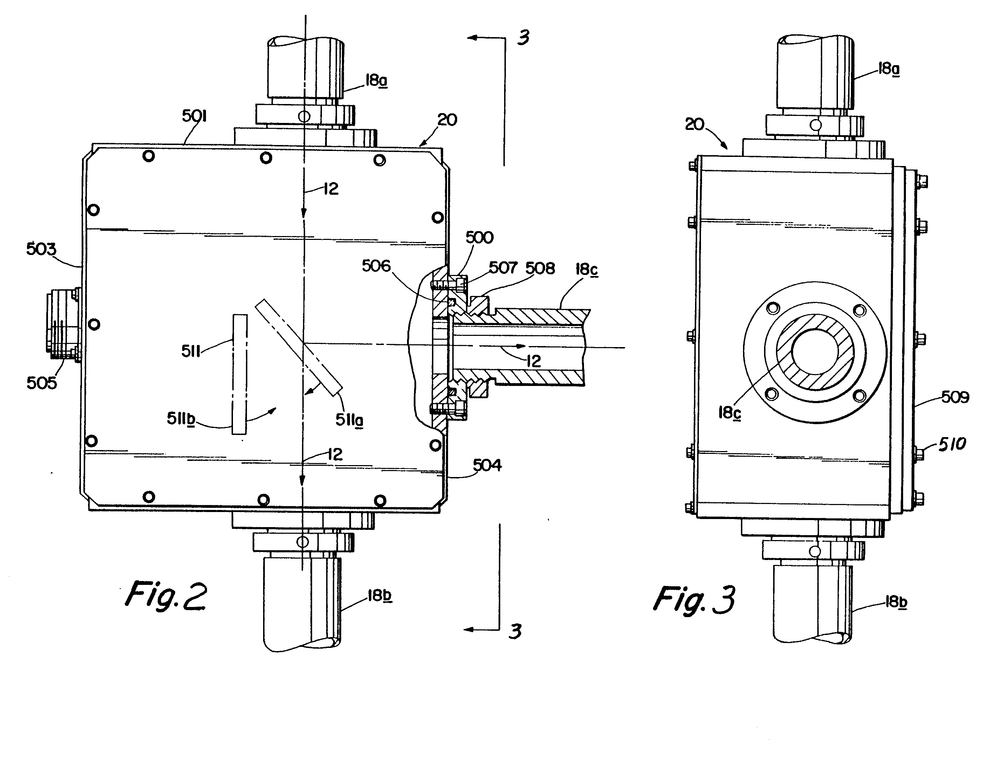

During periods of the robotic cycle when the laser beam 12 is not needed, the beam may be routed to auxiliary units such as laser tools or robots (not shown), connected to an auxiliary light pipe 18c of the beam switching box 20 (Figure 2).

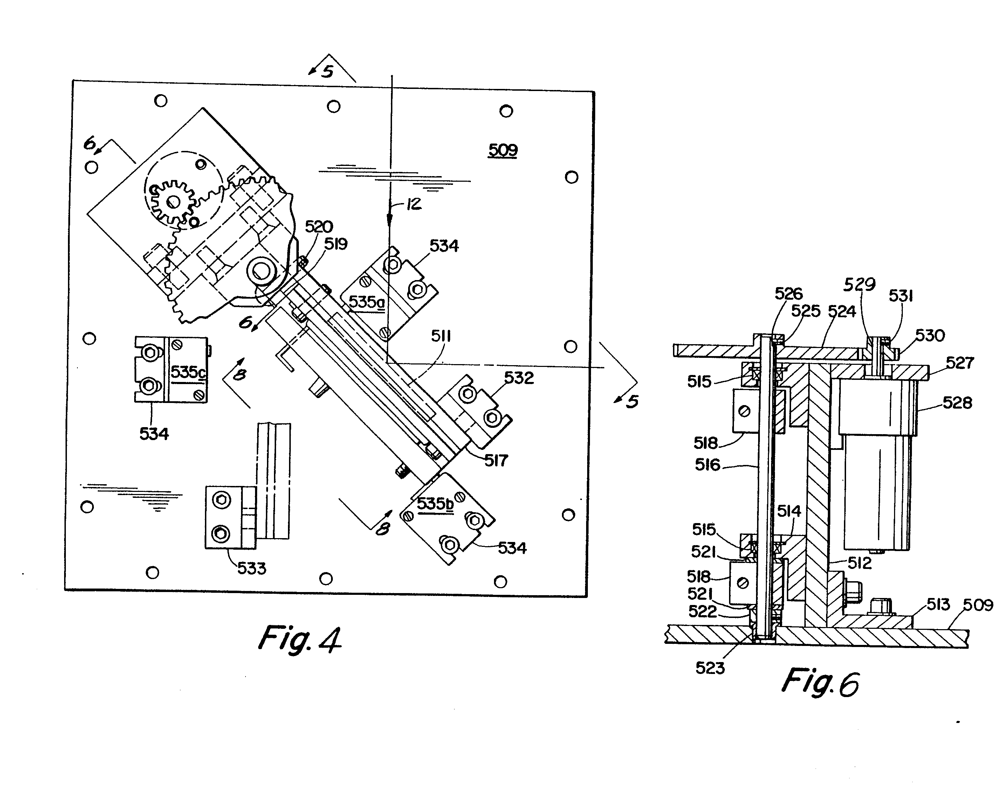

The plan view depicted in Figure 2 illustrates the square beam switching box 20 of Figure 1, having entry and exit light pipes 18a and 18b secured in position with threaded collars 500 secured to the sides 501, 502 of the box 20. Of the remaining two sides 503, 504 of the box 20, one side 503 carries a multi-pin electrical connector 505 for a motor and switches (Figures 4-8) and the other side 504 carries a threaded collar 500 sealed with an 0-ring 506 and secured with screws 507. A side light pipe 18c is threadably received in the collar 500 and held thereto by a locknut 508. Since the light pipes 18a 18b, 18c are tubular and do not extend through the box 20, it can be seen from the view shown in Figure 3 that the box can be secured to a base plate 509 by screws 510 received through the base plate 509 and into the sides 501-504.

A mirror 511 is pivotable between closed and open positions 511a, 511b to either reflect the laser beam 12 to the side pipe 18c or pass the beam 12 through to the in-line pipe 18b.

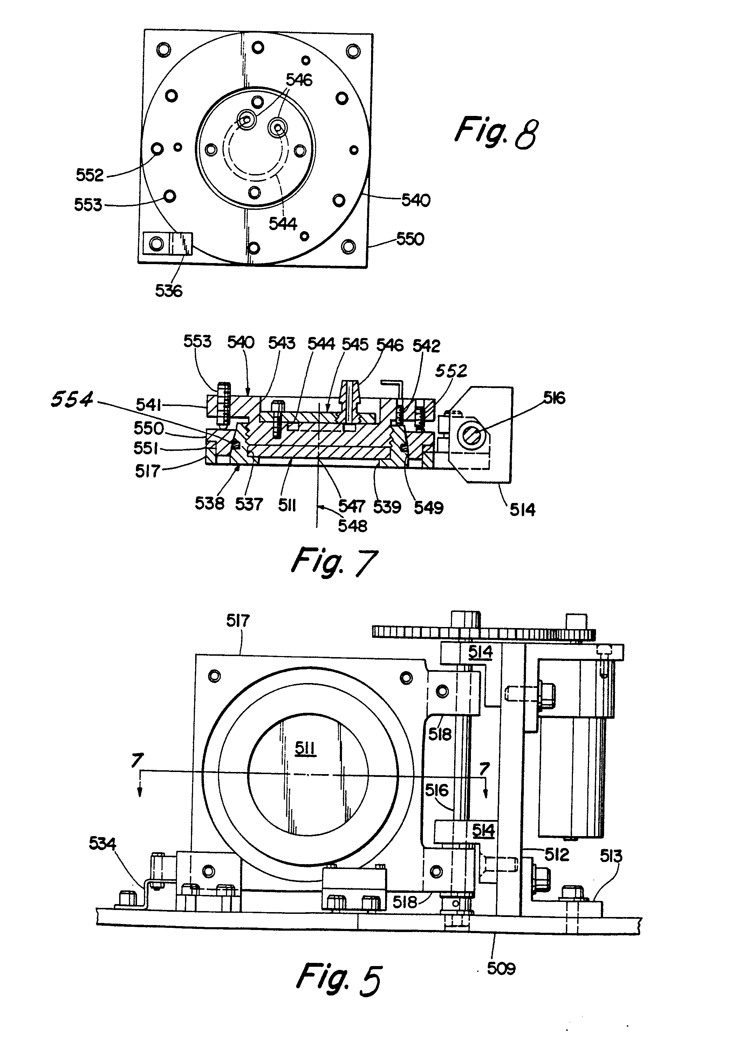

Referring simultaneously to Figures 4 and 5, the sides 501-504 of the box 20 are removed for clarity and Figure 5 shows that the base plate 509 carries a vertical mounting plate 512 attached to a right angle foot plate 513. The vertical mounting plate 512 carries a pair of identical right angle bearing blocks 514 on its opposite side, which contain bearings 515 (see Figure 6) to support a vertical pivot rod 516. The pivot rod 516, in turn, carries a mirror frame or gate 517, which is a generally square vertical plate having side-extending lugs 518 which are bored to fit the pivot rod 516. Saw slots 519 and clamping screws 520 secure the gate 517 to the rod 516. The gate 517 is fitted with a pair of fitting washers 521 to take the vertical shake out of the assembly, the lower fitting washer 521 resting against a collar 522 secured to the pivot rod 516. The bottom of the pivot rod 516 extends into a flanged bushing 523 in the base plate 509. The top of the pivot rod 516 carries a gear 524 secured by a hub set screw 525 tightened against a flat 526 on the rod 516. The top of the vertical mounting plate 512 carries a motor mounting bracket 527 which serves to position a drive motor 528 in a vertical attitude. The shaft 529 of the drive motor 528 carries a drive pinion 530 secured by a set screw 531, the pinion 530 being in constant mesh with the gear 524. The plan view of Figure 4 shows that the gate 517 is pivotable between the closed position shown in solid, i.e., resting against a closed position stop block 532, and an open position shown in phantom, i.e. resting against an open position stop block 533. Three identical switch mounting brackets 534 are secured to the base plate 509, and support identical push button switches 535a, 535b, 535c. Two of the switches 535a, 535b are activated or "made" when the gate 517 is in the closed position, while the third limit switch 535c is activated by bracket 536 (secured to the back of the gate) when the gate 517 is open. As can be seen in Figure 5, the closed position of the gate and its control elements are angled with respect to the base plate to that an incoming laser beam 12 will be reflected 90° to the side when the gate is closed, and the beam 12 will flow directly through when the gate 517 is opened.

The mirror mounting assembly for the mirror gate 517 is shown in Figure 7, where the circular mirror 511 is positioned in the counterbore 537 of a mirror retainer 538, the retainer 538 having a central clearance hole 599 extending therethrough. The counterbore 537 is threaded and received on the threaded diameter of a mirror adjusting bracket 540. The bracket 540 has a cylindrical flange 541 adjacent to the threaded diameter screwed into the mirror retainer 538, and provided with a stop screw 542 to prevent overtightening of the mirror 511. The back face of the mirror adjusting bracket 540 has a counterbore 543 and has a circular facial groove 544 machined into the bottom thereof, in the shape of an incomplete ring with approximately 60° between the start and stop points of the groove 544 (see Figure 8). A cover plate 545 is seated against the bottom of the counterbore 543 to enclose the groove 544, and a pair of barbed hose fittings 546 are threadably received in the coverplate to provide for coolant flow through the groove 544 when it is desired to cool the mirror 511. The outer surface 538a of the mirror retainer 538 is spherical, having a radius swung from the intersection point, or reflecting point 547 of the surface of the mirror 511 at the centreline 548. A spherical socket 549 is provided in a square mounting plate 550 secured to the back of the gate 517 and accurately positioned with a fitting washer 551 to establish the correct adjustment to the mirror reflecting point 547. The flange 541 of the mirror adjusting bracket 540 has three equally-spaced swivel-pad adjusting screws 552 which bear against the mounting plate 550, and thereby provide an accurate swivel adjustment of the spherical mirror retainer 538. A plurality of commercial spring plungers 553, each having a threaded body and spring-loaded nose, are threadably received in the flange 541 to bias the mirror retainer 538 in its spherical socket 549. An 0-ring 554 may be provided on the retainer 538 to introduce a slight drag, to prevent slipping, when adjusting the mirror 511.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

**CLAIMS:**

1. A laser beam switching device comprising:

a housing (20), a beam entry aperture in the housing, a first beam exit aperture in the housing, a second exit beam aperture in the housing located out of line with said entry aperture, a gated mirror means (511, 517, 518) pivotally mounted in said housing, drive means (528) for driving said mirror means between open and closed positions, stop means (532) for accurately locating said mirror means in said closed position, and signal means (535c; 535a, 535b) for indicating said open and closed positions.

2. A laser beam switching device according to Claim 1 comprising light tubes (18a, 18b, 18c) secured over the entry aperture, the first exit aperture and the second exit aperture respectively.

3. A laser beam switcher according to one of Claims 1 and 2 wherein the mirror means (511, 517, 518) is mounted on a pivot rod 516 secured in the housing.

4. A laser beam switching device according to any one of the preceding claims wherein said housing is hermetically sealed with said entry aperture and said first and second exit apertures.

5. A laser beam switching device according to any one of the preceding claims wherein said gated mirror means includes a gate frame (517), a mirror (511), having a mirror plane, adjustably mounted on said gated frame, and means (552) for adjusting said mirror plane.

6. A laser beam switching device according to any one of the preceding claims, wherein said gated frame (517) carries a part-spherical member (549) and said mirror has a corresponding mating part-spherical member (538a).

7. A laser beam switching device according to Claim 6 comprising means (553) to bias the part-spherical surfaces (549, 538a) into engagement.

8.    A laser beam switching device according to any one of the preceding claims comprising means (546) to deliver coolant fluid to the mirror assembly.

*Fig. I*

Fig.2

Fig.3

Fig. 4

Fig. 6

Fig. 8

Fig. 7

Fig. 5